# EUROPEAN PATENT APPLICATION

(11) **EP 2 854 091 A1**
(43) Date of publication of application: **01.04.2015**
(21) Application number: 14186199.7
(22) Date of filing: 24.09.2014
(51) Int. Cl.: G06Q 30/02

(54) **Methods and systems for demand management**

(30) Priority: 27.09.2013 TW 102134941
(71) Applicant: Tell My Friends Corporation, Taipei City 115 (TW)
(72) Inventor: Wang, John C., Taoyuan 330 (TW)
(74) Representative: Müller-Boré & Partner Patentanwälte PartG mbB

(57) **Abstract**

Methods and systems for demand management are provided. First, at least one user device (110, 112) connects to a management platform (130) on an electronic device (200) via a network (140), and a demand list (132) is edited, wherein the demand list (132) includes at least one product or at least one service. At least one merchant device (120, 122) connects to the management platform (130) on the electronic device (200) via the network (140) to review the demand list (132) corresponding to the user device (110, 112) and sends a notification to the user device (110, 112), wherein the notification provides information about the product or service on the demand list (132).

## Description

### BACKGROUND

### Technical Field

The disclosure relates generally to methods and systems for demand management and, more particularly, to methods and systems for demand management, in which users can edit their demand lists, and merchants can view the demand lists and voluntarily provide offers for the demand lists.

### Description of the Related Art

Up until now, advertisement has been an important way to promote products or services for merchants. In the past, merchants used traditional media, such as leaflets, newspapers, magazines, and/or TV for advertisements. With the wide-spread adoption of electronic devices and the rapid development of Internet, Internet marketing has risen to become one of the most important methods for merchants to market their goods and services.

Internet marketing includes traditional Internet marketing, such as website banners, text hyperlinks, and mail. Keyword search engines are also becoming very popular methods for Internet marketing. Utilizing website banners, frequently seen on website portals, is the most common method of advertising on the Internet. However, banners are not targeted as majority of the viewers may not at all be interested in the product or service being advertised. Furthermore, even those who respond to the website banner may not be the right target customers for the merchant. When it comes to promotional e-mail, the marketer can ensure that the email advertisement is sent to a large group of persons, however, oftentimes the email is considered junk email or spam and discarded. Furthermore, the persons who receive the mail are not always accurately identified as potential customers for the merchant. Additionally, keyword search engine is a very popular method of Internet marketing. Marketers pay online search engine hosts so that their websites promoting their goods or services can be easily seen by users searching for a specific items related to their goods or services. Keyword search engine marketing works when the customer is actually shopping for an item, as it creates a link between the user's interest and the merchants' products or services, thereby increasing the potential for commercial activities.

Regardless whether marketing in the physical or virtual channels, advertisements are merchant initiated. In other words, advertisements are sent without considering the actual demands of customers. Consequently, the success rate of advertisement is always on the low side. Since the cost for advertisement and the beneficial results are disproportionate, advertising has become burdensome for most merchants.

Usually, the targets of an advertisement cannot be correctly identified. For example, regardless of whether a user is interested in a very specific product or an aspect of that product, the promotion information for each user tends to be very broad and uniform for every target customer. Since advertisement is designed to appeal to a wide audience it cannot at the same time be directed towards specific customers' needs, thereby oftentimes wasting the marketing resources of merchants.

### SUMMARY

### Methods and systems for demand management are provided.

In an embodiment of a method for demand management, at least one user device connects to a management platform on an electronic device via a network, and edits a demand list, wherein the demand list includes at least one product or at least one service. At least one merchant device connects to the management platform on the electronic device via the network to review the demand list corresponding to the user device, and sends a notification to the user device, wherein the notification records information about the product or service on the demand list.

An embodiment of a system for demand management comprises a storage unit and a processing unit. The storage unit comprises a demand list corresponding to at least one user device, in which the demand list includes at least one product or at least one service. The processing unit executes a management platform, and receives a connection of the user device via a network, wherein the user device edits the demand list on the management platform. The processing unit receives a connection of at least one merchant device via a network, wherein the merchant device reviews the demand list corresponding to the user device, and sends a notification to the user device via the management platform, in which the notification records information about the product or service on the demand list.

In some embodiments, the product or service on the demand list is represented as a specific classification system, and the management platform further provides a user interface for selecting the specific classification system corresponding to the product or service. In some embodiments, the specific classification system comprises SIC (Standard Industrial Classification) codes.

In some embodiments, at least one intermediate device connects to the management platform via the network, to review the demand list corresponding to the user device, and communicate with the merchant device according to the demand list.

In some embodiments, the management platform further provides a tracking function for tracking the purchasing information corresponding to the product or service on the demand list.

In some embodiments, the management platform further provides a trading function for performing a purchasing or negotiation process for the product or service by the user device, in response to the notification.

In some embodiments, the management platform further gathers statistics for the at least one product or service on the demand list corresponding to at least one user device, and provides corresponding statistical results to at least one merchant device.

The methods and systems for demand management of the present invention allow users to edit demand lists, and provide merchants to voluntarily provide offers for the demand lists.

Methods for demand management may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for demand management of the invention;
Fig. 2 is a schematic diagram illustrating an embodiment of an electronic device executing a management platform of the invention;
Fig. 3 is a flowchart of an embodiment of a method for demand management of the invention;
Fig. 4 is a flowchart of another embodiment of a method for demand management of the invention;
Fig. 5 is a flowchart of another embodiment of a method for demand management of the invention;
Fig. 6 is a flowchart of another embodiment of a method for demand management of the invention; and
Fig. 7 is a flowchart of another embodiment of a method for demand management of the invention.

### DETAILED DESCRIPTION OF THE INVENTION

### Methods and systems for demand management are provided.

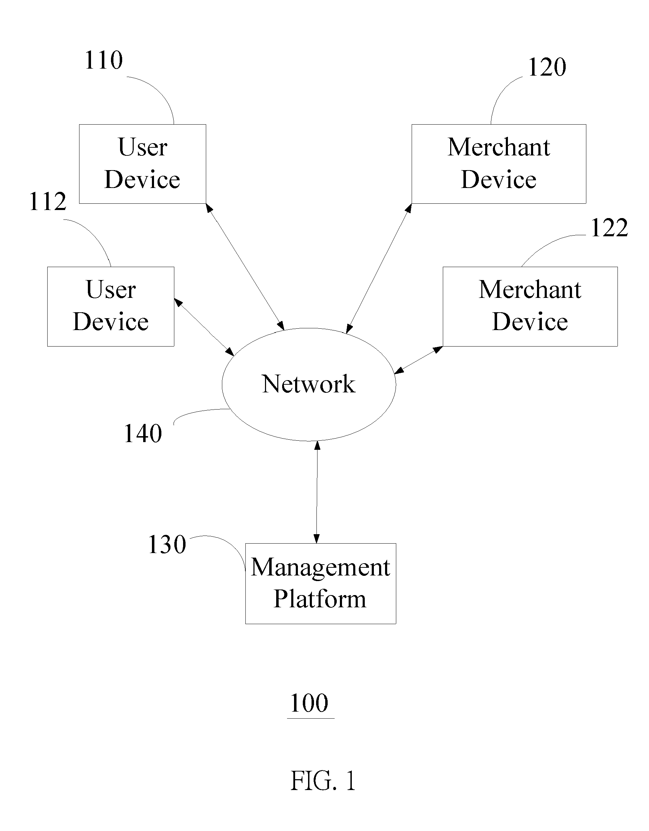

Fig. 1 is a schematic diagram illustrating an embodiment of a system for demand management of the invention. The system for demand management 100 can comprise at least one user device (110, 112), at least one merchant device (120, 122), and a management platform 130. It is noted that, the user device may be any electronic device having network connecting capabilities, such as a computer, or a mobile device, such as a mobile phone, a smart phone, a PDA (Personal Digital Assistant), a GPS (Global Positioning System), or a notebook. Each user can use a user device to connect to the management platform 130 via a network 140, such as a wired network, a telecommunication network, and/or a wireless network, and perform related operations for demand management. Additionally, the merchant device may be any electronic device having network connecting capabilities, such as a computer, or a mobile device, such as a mobile phone, a smart phone, a PDA, a GPS, or a notebook. Each merchant can use a merchant device to connect to the management platform 130 via the network 140, and perform related operations for demand management. It is understood that, in some embodiments, at least one intermediate device can connect to the management platform 130 via the network 140. Similarly, the intermediate device may be any electronic device having network connecting capabilities, such as a computer, or a mobile device, such as a mobile phone, a smart phone, a PDA, a GPS, or a notebook. It is noted that, in some embodiments, a specific user who knows the above user, such as a friend of the user can use the intermediate device to connect to the management platform 130, and perform related operations for demand management.

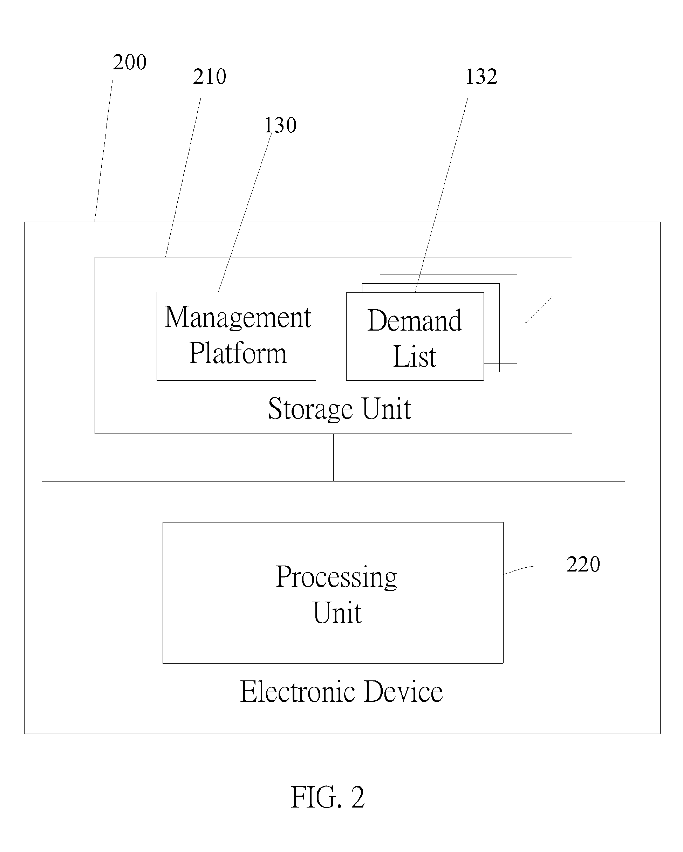

Fig. 2 is a schematic diagram illustrating an embodiment of an electronic device executing a management platform of the invention. The electronic device 200 for executing a management platform of the invention comprises a storage unit 210 and a processing unit 220. The storage unit 210 can temporarily or permanently store related data, such as the management platform 130 executed by the processing unit 130, the demand list 132 corresponding to respective user, and/or related data, such as related figures and interfaces, such as a user interface provided by the management platform 130. It is understood that, in some embodiments, the management platform 130 may have a classification system, such as SIC codes, which can be displayed in a user interface for user selection. It is noted that, the electronic device 200 for executing the management platform can have a network connecting unit (not shown in Fig. 2). The electronic device 200 can have network connecting capabilities by using the network connecting unit. The processing unit 220 can control related operations of hardware and software in the electronic device 200.

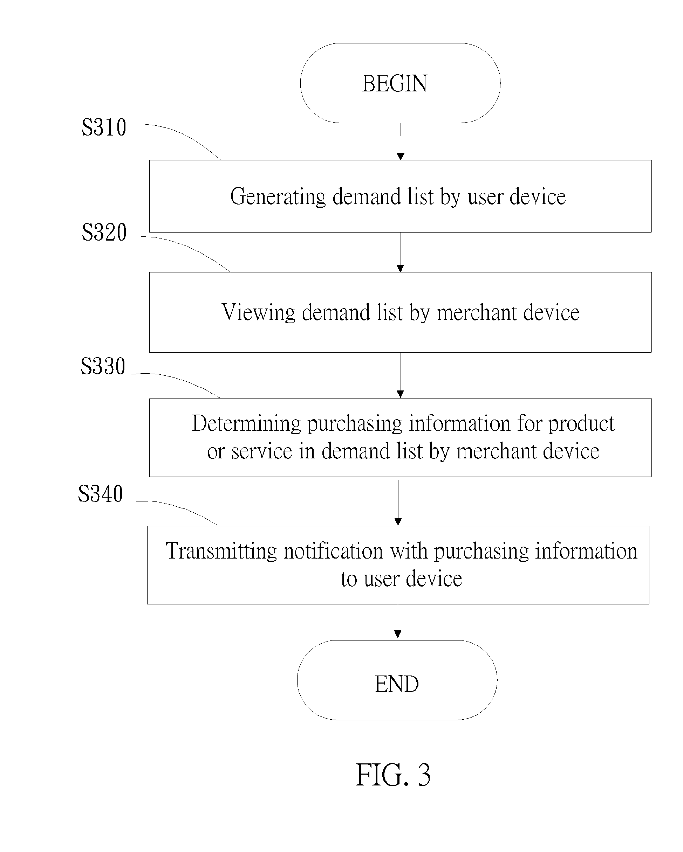

Fig. 3 is a flowchart of an embodiment of a method for demand management of the invention.
   In step S310, at least one user device connects to a management platform on an electronic device via a network, and a demand list is edited. In some embodiments, the user device may be any electronic device having network connecting capabilities, such as a computer or a mobile device. Each user can use a user device to connect to the management platform. It is understood that, in some embodiments, a user must register as a member of the management platform, such that the user can use related services on the management platform. The demand list includes at least one product or at least one service. It is understood that, in some embodiments, the product or service on the demand list can be represented as a specific classification system, such as SIC codes. As described, the management platform can provide a user interface with the specific classification system, and the user can select the specific classification system corresponding to the product or service. Then, in step S320, at least one merchant device connects to the management platform on the electronic device via the network, and reviews the demand list corresponding to at least one user device. Similarly, the merchant device may be any electronic device having network connecting capabilities, such as a computer or a mobile device. Each merchant, such as a retailer or a marketing company can use a merchant device to connect to the management platform. In step S330, at least one merchant device determines information about the product or service on the demand list. It is understood that, the determined information may be any information about the product or service. In some embodiments, the information may be a purchasing proposal, a price, a discount, a gift, and/or a time limit that can be provided for obtaining the product or service. In step S340, the management platform transmits a notification to the user device corresponding to the demand list. It is noted that, in some embodiments, the notification can comprise the information determined by the merchant for the product or service on the demand list. It is noted that, in some embodiments, the management platform transmits the notification to the user device by transmitting the notification to an account corresponding to the user in the management platform.
   For example, a specific user can edit a demand list on the management platform. The demand list can include a 42-inch LED TV. Related merchants can login to the management platform, and review the demand list corresponding to the specific user, thus discovering that the specific user wants to buy a 42-inch LED TV. Merchants representing different brands can then respectively provide their own information to the specific user. The specific user can decide whether to buy a 42-inch LED TV based on the information provided by the respective merchants.

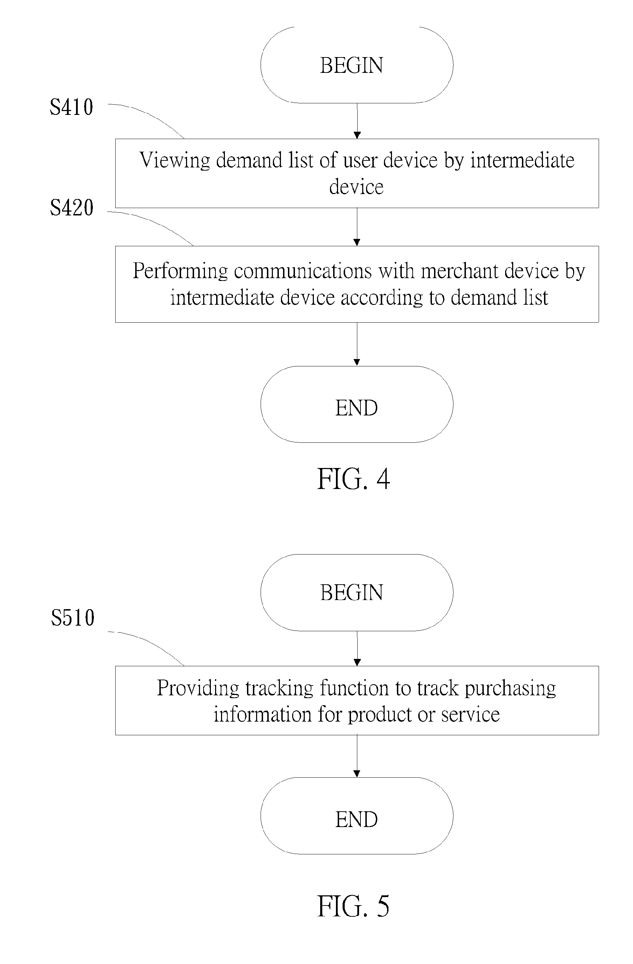

Fig. 4 is a flowchart of another embodiment of a method for demand management of the invention. In step S410, at least one intermediate device connects to the management platform on the electronic device via the network and reviews the demand list corresponding to at least one user device. The intermediate device may be any electronic device having network connecting capabilities such as a computer or a mobile device. A friend of the user corresponding to the user device can use an intermediate device to connect to the management platform. Then, in step S420, the intermediate device communicates with the merchant device according to the demand list. It is understood that, in some embodiments, the intermediate device can ask the merchant device to provide information according to the demand list, so that the notification transmitted to the user device responding to the demand is generated. In some embodiments, the intermediate device can ask the merchant device to provide information according to the demand list and directly purchase the product or service on the demand list. Similarly, in some embodiments, the information may be a purchasing proposal, a price, a discount, a gift, and/or a time limit for obtaining the product or service.
   In the above example, a friend of the specific user can login to the management platform, and review the demand list of the specific user, thus discovering that the specific user wants to buy a 42-inch LED TV. At this time, the friend can communicate with related merchants and the respective merchants can provide their own information to the specific user, or the friend can directly buy a 42-inch LED TV based on the information, and give it to the specific user as a gift.
   It is noted that, the management platform can provide various demand management functions.
Fig. 5 is a flowchart of another embodiment of a method for demand management of the invention. In step S510, the management platform provides a tracking function for tracking the purchasing information corresponding to the product or service on the demand list. It is understood that, in some embodiments, the tracking function can be further reviewed and adjusted at a specific time interval, such as every week, every month, or every quarter. For example, when a product is still on the demand list of a user, the management platform can record the information provided by related merchants for the product in every month, such that the user can refer the information for purchasing.

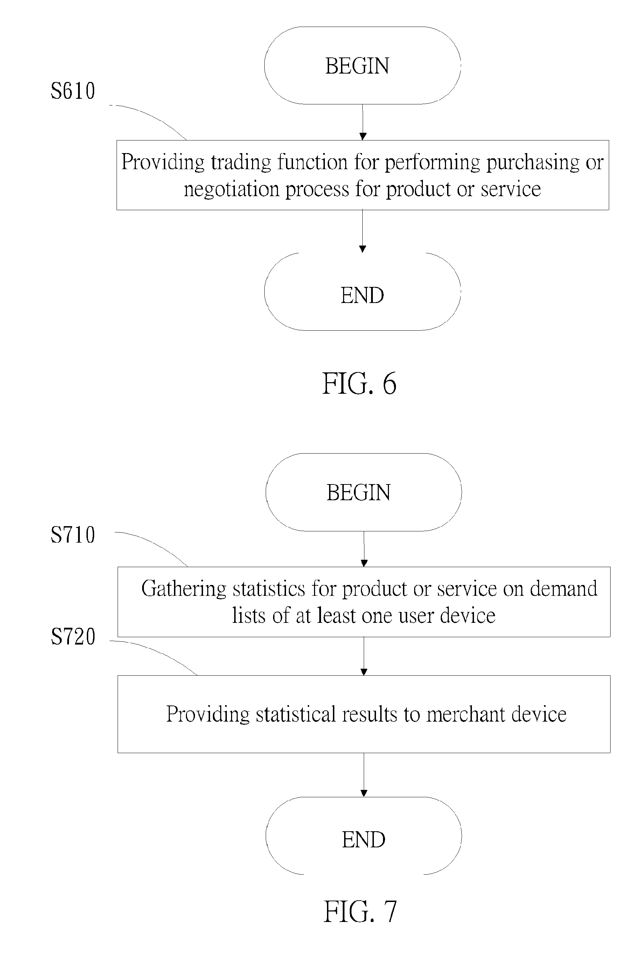

Fig. 6 is a flowchart of another embodiment of a method for demand management of the invention. In step S610, the management platform provides a trading function for performing a purchasing or negotiation process for the product or service by the user device in response to the notification corresponding to the merchant. It is understood that, in some embodiments, the purchasing process can be performed in the management platform, or automatically re-directed to a shopping platform of the merchant to perform. In some embodiments, when the user wants to perform the negotiation process, the management platform can provide a user interface so that the user can input related messages to the user interface and the management platform can forward the messages to the merchant.
Fig. 7 is a flowchart of another embodiment of a method for demand management of the invention. In step S710, the management platform gathers statistics for at least one product or service on the demand list corresponding to at least one user device, and in step S720, it provides a corresponding statistical results to at least one merchant device. It is understood that, in some embodiments, the statistical results is only transmitted to the merchants who can provide the product and/or service.

It is noted that, in some embodiments, each user can set an authority for viewing the demand list and/or the product or service therein. For example, the demand list of a user and/or the product or service therein can be set to be only viewable by merchants, or set to be viewable by friends and merchants.

It is understood that, in some embodiments, after the user device completes the editing of the demand list or receives the notification with information from the merchant, the management platform can connect to at least one social network corresponding to the user device. The user corresponding to the user device may have friends or fans in the social network. The management platform can send an invitation regarding to the management platform to at least one of the friends or fans of the user in the social network. Additionally, in some embodiments, the user corresponding to the user device and his friends can commonly edit a demand list, thus to request the merchants to provide information for the corresponding product or service in a group purchasing way.

Therefore, in the methods and systems for demand management of the present invention, users can edit their demand lists, and merchants can view the demand lists, and voluntarily provide offers for the demand lists. Users can decide whether to buy related product and/or service based on the offer provided by the respective merchants. By using the present invention, the traditional advertisement which is designed and published by the merchant as a starting point is changed into a novel marketing model which is published from the customer as a starting point, so that the merchants can reduce inefficient advertising efforts and related costs. Additionally, merchants can make different promotions for respective users, thereby further tailoring their offers and fulfilling the requirements of users.

Methods for demand management, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

It is to be noted that although the preferred embodiment of the present invention has been described, other modifications, alterations or minor change to the structure should still be within the scope defined in the claims. As those skilled in the art will readily observe that numerous modifications and alterations of the device and method may be made while retaining the teachings of the invention.

## Claims

1. A method for demand management for use in an electronic device(200), comprising:
receiving a connection of at least one user device (110, 112) via a network (140), wherein the user device (110, 112) connects to a management platform (130) on the electronic device (200);
receiving a demand list edited on the management platform (130) by the user device (110, 112), wherein the demand list (132) comprises at least one product or at least one service; and
receiving a connection of at least one merchant device (120, 122) via the network (140), wherein the merchant device (120, 122) connects to the management platform (130) to review the demand list (132) corresponding to the user device (110, 112), and sends a notification to the user device (110, 112), wherein the notification records information about the product or service on the demand list (132).

2. The method of claim 1, wherein the product or service on the demand list (132) is represented as a specific classification system, and the management platform (130) further provides a user interface for selecting the specific classification system corresponding to the product or service.

3. The method of claim 2, wherein the specific classification system comprises SIC (Standard Industrial Classification) codes.

4. The method of any of claims 1 to 3, further comprising receiving a connection of at least one intermediate device, wherein the intermediate device connects to the management platform (130) to review the demand list corresponding to the user device (110, 112), and communicates with the merchant device (120, 122) according to the demand list (132).

5. The method of any of claims 1 to 4, wherein the management platform (130) further provides a tracking function for tracking the purchasing information corresponding to the product or service on the demand list (132).

6. The method of any of claims 1 to 5, wherein the management platform (130) further provides a trading function for performing a purchasing or negotiation process for the product or service by the user device (110, 112), in response to the notification.

7. The method of any of claims 1 to 6, wherein the management platform (130) further gathers statistics for the at least one product or service on the demand list (132) corresponding to the at least one user device (110, 112), and provides a corresponding statistical results to the at least one merchant device (120, 122).

8. A system for demand management (100) for use in an electronic device (200), comprising:
a storage unit (210) comprising a demand list (132), wherein the demand list (132) comprises at least one product or at least one service; and
a processing unit (220) executing a management platform (130), receiving a connection of at least one user device (110, 112) via a network (130), receiving the demand list (132) edited on the management platform (130) by the user device (110, 112), and receiving a connection of at least one merchant device (120, 122) via the network (140),
wherein the merchant device (120, 122) connects to the management platform (130) to review the demand list (132) corresponding to the user device (110, 112), and sends a notification to the user device (110, 112), wherein the notification records information about the product or service on the demand list (132).

9. The system of claim 8, wherein the product or service on the demand list is represented as a specific classification system, and the management platform (130) further provides a user interface for selecting the specific classification system corresponding to the product or service.

10. The system of claim 9, wherein the specific classification system comprises SIC (Standard Industrial Classification) codes.

11. The system of any of claims 8 to 10, wherein the processing unit (220) further receives a connection of at least one intermediate device, wherein the intermediate device connects to the management platform (130) to review the demand list (132) corresponding to the user device (110, 112) and communicates with the merchant device (120, 122) according to the demand list (132).

12. The system of any of claims 8 to 11, wherein the management platform (130) further provides a tracking function for tracking the purchasing information corresponding to the product or service on the demand list (132).

13. The system of any of claims 8 to 12, wherein the management platform (130) further provides a trading function for performing a purchasing or negotiation process for the product or service by the user device (110, 112), in response to the notification.

14. The system of any of claims 8 to 13, wherein the processing unit (220) further gathers statistics for the at least one product or service on the demand list (132) corresponding to the at least one user device (110, 112), and provides a corresponding statistical results to the at least one merchant device (120, 122).

15. A machine-readable storage medium comprising a computer program, which, when executed, causes a device to perform a method for demand management, wherein the method comprises:
receiving a connection of at least one user device (110, 112) via a network (140), wherein the user device (110, 112) connects to a management platform (130) on the electronic device (200);
receiving a demand list (132) edited on the management platform (130) by the user device (110, 112), wherein the demand list (132) comprises at least one product or at least one service; and
receiving a connection of at least one merchant device (120, 122) via the network (140), wherein the merchant device (120, 122) connects to the management platform (130) to review the demand list (132) corresponding to the user device (110, 112), and sends a notification to the user device (110, 112), wherein the notification records information about the product or service on the demand list (132).
